# EUROPÄISCHE PATENTANMELDUNG

(11) **EP 4 516 648 A1**
(43) Veröffentlichungstag der Anmeldung: **05.03.2025**
(21) Anmeldenummer: 24195879.2
(22) Anmeldetag: 22.08.2024
(51) Int. Cl.: B62D 59/04, B60D 1/62, B60P 3/32, B62D 63/02, B62D 63/08

(54) **ANHÄNGER, INSBESONDERE WOHNWAGEN**

(30) Priorität: 25.08.2023 DE 102023122827
(71) Anmelder: Reich Gesellschaft mbH Regel- und Sicherheitstechnik, 35713 Eschenburg (DE)
(72) Erfinder: SIJBRANDA, Sjoerd, 4921 SP Made (NL); THEISS, Marc André, 35687 Dillenburg (DE); BENDER, Steffen, 35713 Eschenburg (DE); SCHAURER, Oliver, 85445 Oberding (DE)
(74) Vertreter: Hofstetter, Schurack & Partner

(57) **Zusammenfassung**

Die Erfindung betrifft einen Anhänger (10), mit einem Fahrgestell (12), an welchem wenigstens eine Fahrzeugachse (18) mit zwei Fahrzeugrädern (20, 22) gehalten ist, mit einem separat von dem Fahrgestell (12) ausgebildeten und an dem Fahrgestell (12) gehaltenen Aufbau (30), durch welchen ein Innenraum (32) gebildet ist, und mit einem Hilfsantrieb (34), welcher wenigstens einen Elektromotor (36), mittels welchem eines der Fahrzeugräder (20, 22) der Fahrzeugachse (18) antreibbar ist, eine elektronische Recheneinrichtung (66), mittels welcher der Elektromotor (36) ansteuerbar und dadurch betreibbar ist, und wenigstens einen elektrischen Energiespeicher (68) zum Speichern von elektrischer Energie aufweist, mit welcher der Elektromotor (36) versorgbar ist. Der Elektromotor (36) ist Bestandteil eines außerhalb des Aufbaus (30) angeordneten und an dem Fahrgestell (12) gehaltenen, ersten Moduls (M1) mit einer ersten Steckverbindungseinrichtung (70) und einem ersten Gehäuse (72), in welchem der Elektromotor (36) angeordnet ist.

## Beschreibung

Die vorliegende Erfindung betrifft einen Anhänger, insbesondere einen Wohnwagen, gemäß dem Oberbegriff von Patentanspruch 1.

Der DE 20 2016 105 321 U1 ist ein Rangierantriebssystem für ein Fahrzeug als bekannt zu entnehmen, mit wenigstens zwei Antriebseinheiten, die ausgebildet sind, um an dem Fahrzeug vorgesehen zu werden und jeweils ein Rad des Fahrzeugs anzutreiben. Die EP 2 810 851 A1 offenbart eine Antriebseinheit für einen Anhänger. Des Weiteren ist aus der GB 2541673 A1 eine Antriebseinheit für einen Anhänger bekannt. Ferner offenbart die US 2021/0001936 A1 eine Antriebseinheit für einen Anhänger.

Aufgabe der vorliegenden Erfindung ist es, einen ganz vorzugsweise als Wohnwagen ausgebildeten Anhänger zu schaffen, sodass der Wohnwagen besonders vorteilhaft mit einem Hilfsantrieb ausgestattet werden kann.

Diese Aufgabe wird durch einen Anhänger mit den Merkmalen des Patentanspruchs 1 gelöst. Vorteilhafte Ausgestaltungen mit zweckmäßigen Weiterbildungen der Erfindung sind in den übrigen Ansprüchen angegeben.

Die Erfindung betrifft einen Anhänger, welcher ganz vorzugsweise als ein auch als Caravan oder Campingwagen bezeichneter Wohnwagen ausgebildet ist. Der erfindungsgemäße, beispielsweise als Wohnwagen ausgebildete Anhänger ist ein als Landfahrzeug ausgebildeter Anhänger, welcher eine erste Koppeleinrichtung aufweist, mittels welcher der Anhänger gelenkig mit einem als Kraftfahrzeug ausgebildeten Zugfahrzeug, insbesondere zerstörungsfrei lösbar, koppelbar ist. Vorzugsweise ist die erste Koppeleinrichtung als eine auch als Kugelkopfkupplung bezeichnete Kugelkupplung ausgebildet, die ganz insbesondere an einer Deichsel des Anhängers angeordnet ist. Insbesondere kann die erste Koppeleinrichtung des Anhängers gelenkig mit einer zweiten Koppeleinrichtung des Zugfahrzeugs gekoppelt werden, wobei die zweite Koppeleinrichtung auch als Anhängerkupplung bezeichnet wird und beispielsweise einen Kugelkopf aufweist, mit der die Kugelkupplung gelenkig gekoppelt werden kann.

Der Anhänger weist ein Fahrgestell auf, an welchem beispielsweise die erste Koppeleinrichtung, insbesondere die Deichsel, angeordnet ist. An dem Fahrgestell ist wenigstens eine Fahrzeugachse des Anhängers gehalten, wobei die Fahrzeugachse wenigstens oder genau zwei einfach auch als Räder bezeichnete Fahrzeugräder aufweist. Die Fahrzeugachse wird auch einfach als Achse bezeichnet. Vorzugsweise sind die Fahrzeugräder der Fahrzeugachse auf in Fahrzeugquerrichtung des Anhängers einander gegenüberliegenden Seiten des Anhängers angeordnet. Die Fahrzeugräder sind Bodenkontaktelemente, über welche der Anhänger in Fahrzeughochrichtung des Anhängers nach unten hin an einem Boden abstützbar oder abgestützt ist. Wird der Anhänger entlang des Bodens gefahren, während der Anhänger in Fahrzeughochrichtung des Anhängers nach unten hin über die Bodenkontaktelemente (Fahrzeugräder) abgestützt ist, so rollen die Bodenkontaktelemente, insbesondere direkt, an dem Boden ab. Beispielsweise wird der Anhänger derart entlang des Bodens gefahren, dass der Anhänger in gelenkig mit dem Zugfahrzeug gekoppeltem Zustand des Anhängers mittels des Zugfahrzeugs gezogen oder geschoben wird.

Der Anhänger weist einen separat von dem Fahrgestell ausgebildeten und an dem Fahrgestell gehaltenen Aufbau auf, durch welchen ein Innenraum, insbesondere für Personen, gebildet ist. Ist somit beispielsweise der insbesondere als Wohnwagen ausgebildete Anhänger auf einem Campingplatz abgestellt, so können sich im Innenraum des Anhängers beispielsweise Personen aufhalten. Insbesondere können die Personen in dem Innenraum schlafen. Ferner können beispielsweise die Personen in dem Innenraum Essen zubereiten und das Essen zu sich nehmen. Somit ist beispielsweise in dem Innenraum wenigstens ein Schlafplatz angeordnet, welcher insbesondere durch ein im Innenraum angeordnetes Bett bereitgestellt ist.

Der Anhänger weist außerdem einen Hilfsantrieb auf, welcher ganz insbesondere separat von dem Fahrgestell ausgebildet und an dem Fahrgestell gehalten ist. Der Hilfsantrieb weist wenigstens einen Elektromotor auf, mittels welchem wenigstens oder genau eines der Fahrzeugräder der Fahrzeugachse antreibbar ist. Der Hilfsantrieb weist außerdem eine elektronische Recheneinrichtung auf, mittels welcher der Elektromotor ansteuerbar und dadurch betreibbar ist. Die elektronische Recheneinrichtung wird beispielsweise auch als Steuergerät bezeichnet. Ferner ist es denkbar, dass die elektronische Recheneinrichtung beispielsweise wenigstens oder genau ein Steuergerät ist oder umfasst. Der Hilfsantrieb weist außerdem wenigstens einen elektrischen Energiespeicher auf, in welchem elektrische Energie, mit welcher der wenigstens eine Elektromotor versorgbar ist, zu speichern oder gespeichert ist. Der elektrische Energiespeicher wird auch als Batterie oder Sekundärbatterie bezeichnet. Der wenigstens eine Elektromotor wird auch als erster Elektromotor bezeichnet. Wenn zuvor und im Folgenden die Rede von dem Elektromotor oder von dem wenigstens einen Elektromotor ist, so ist darunter, falls nichts anderes angegeben ist, der erste Elektromotor zu verstehen, mittels welchem das wenigstens oder genau eine Fahrzeugrad antreibbar ist. Das wenigstens oder genau eine mittels des Elektromotors antreibbare Fahrzeugrad wird auch als erstes Fahrzeugrad bezeichnet. Wenn zuvor und im Folgenden die Rede von dem Fahrzeugrad ist, so ist darunter, falls nichts anderes angegeben ist, das erste Fahrzeugrad zu verstehen, welches mittels des Elektromotors antreibbar ist.

Beispielsweise weist der Hilfsantrieb eine auch als erste Antriebsrolle bezeichnete Antriebsrolle auf, welche beispielsweise relativ zu dem Fahrgestell oder relativ zu dem Fahrzeugrad, insbesondere translatorisch, bewegbar ist, nämlich zwischen einer Ruhestellung und wenigstens einer Antriebsstellung. In der Ruhestellung ist die Antriebsrolle von dem Fahrzeugrad, insbesondere vollständig, entfernt, sodass in der Ruhestellung die Antriebsrolle das Fahrzeugrad nicht berührt. In der Antriebsstellung befindet sich die Antriebsrolle, insbesondere eine außenumfangsseitige Mantelfläche der Antriebsrolle, in, insbesondere direktem, Kontakt mit dem Fahrzeugrad, insbesondere mit einer Lauffläche des Fahrzeugrads, welches über seine Lauffläche, insbesondere direkt, an dem Boden abstützbar oder abgestützt ist. Insbesondere rollt dann, wenn der Anhänger entlang des Bodens gefahren wird, die Lauffläche des Fahrzeugrads, insbesondere direkt, an dem Boden ab. Die Antriebsrolle ist mittels des Elektromotors antreibbar und dadurch um eine Rollendrehachse relativ zu dem Fahrgestell drehbar. Wird die Antriebsrolle mittels des Elektromotors angetrieben und dadurch relativ zu dem Fahrgestell um die Rollendrehachse gedreht, während sich die Antriebsrolle in der Antriebsstellung befindet, das heißt während die Antriebsrolle, insbesondere die außenumfangsseitige Mantelfläche, das Fahrzeugrad, insbesondere die Lauffläche des Fahrzeugrads, berührt, so treibt hierdurch die Antriebsrolle das Fahrzeugrad an, wodurch das Fahrzeugrad um eine Rollendrehachse relativ zu dem Fahrgestell gedreht wird. Hierdurch kann der Anhänger angetrieben werden.

Um nun den Anhänger besonders einfach und somit zeit- und kostengünstig sowie besonders bedarfsgerecht mit dem Hilfsantrieb ausstatten zu können, ist es erfindungsgemäß vorgesehen, dass der Elektromotor ein Bestandteil eines, insbesondere vollständig, außerhalb des Aufbaus angeordneten und, insbesondere direkt, an dem Fahrgestell gehaltenen, ersten Moduls ist, welches eine erste Steckverbindungseinrichtung und ein erstes Gehäuse aufweist, in welchem der Elektromotor angeordnet ist. Der Elektromotor weist insbesondere einen Stator und einen Rotor auf, welcher mittels des Stators antreibbar und dadurch um eine Motordrehachse relativ zu dem Stator drehbar ist. Der Rotor wird auch als erster Rotor bezeichnet, und der Stator wird auch als erster Stator bezeichnet, und die Motordrehachse wird auch als erste Motordrehachse bezeichnet. Über seinen Rotor kann der Elektromotor Antriebsdrehmomente bereitstellen, mittels welchen die Antriebsrolle, welche auch als Walze oder Antriebswalze bezeichnet wird, antreibbar ist. Bei der Erfindung sind der Elektromotor und somit der Stator und der Rotor Bestandteile des ersten Moduls und in dem ersten Gehäuse angeordnet, sodass der Rotor um die Motordrehachse relativ zu dem ersten Gehäuse drehbar ist. Insbesondere ist der Stator an dem ersten Gehäuse derart festgelegt, dass Relativdrehungen zwischen dem Stator und dem ersten Gehäuse unterbunden sind und dass translatorische Relativbewegungen zwischen dem Stator und dem ersten Gehäuse unterbunden sind.

Erfindungsgemäß ist es außerdem vorgesehen, dass die elektronische Recheneinrichtung und der elektrische Energiespeicher Bestandteile eines, insbesondere vollständig, außerhalb des Aufbaus angeordneten und, insbesondere direkt, an dem Fahrgestell gehaltenen und, insbesondere vollständig, außerhalb des ersten Moduls angeordneten und separat von dem ersten Modul ausgebildeten, zweiten Moduls sind, welches eine zweite Steckverbindungseinrichtung und ein zweites Gehäuse aufweist, in welchem die elektronische Recheneinrichtung und der elektrische Energiespeicher angeordnet sind. Die elektronische Recheneinrichtung umfasst beispielsweise eine Platine und an der Platine gehaltene und somit durch die Platine getragene, elektronische Bauelemente, wobei beispielsweise wenigstens eines der elektronischen Bauelemente ein Prozessor ist, welcher auch als Hauptprozessor bezeichnet wird oder als ein Hauptprozessor ausgebildet ist. Der Prozessor, insbesondere der Hauptprozessor, wird auch als zentrale Recheneinheit (CPU) bezeichnet. Der elektrische Energiespeicher weist beispielsweise Speicherzellen auf, welche separat voneinander ausgebildet und elektrisch miteinander verbunden sind. Mittels des Energiespeichers, das heißt in dem Energiespeicher, kann die elektrische Energie, insbesondere elektrochemisch, gespeichert sein. Insbesondere kann die elektrische Energie in den Speicherzellen, insbesondere elektrochemisch, zu speichern oder gespeichert sein. Des Weiteren ist es vorgesehen, dass das erste Modul, insbesondere vollständig, außerhalb des zweiten Moduls angeordnet ist. Außerdem ist das erste Modul separat von dem zweiten Modul ausgebildet. Die Steckverbindungseinrichtungen sind ineinandersteckbar und dadurch zerstörungsfrei lösbar miteinander verbindbar. Insbesondere ist es denkbar, dass die Steckverbindungseinrichtungen ineinander gesteckt und dadurch zerstörungsfrei lösbar miteinander verbunden sind. Dies bedeutet, dass die Steckverbindungseinrichtungen ineinander gesteckt und dadurch miteinander verbunden, daraufhin wieder voneinander gelöst und somit voneinander getrennt und daraufhin wieder ineinander gesteckt und dadurch wieder miteinander verbunden werden können, ohne dass es zu Beschädigungen oder Zerstörungen der Steckverbindungseinrichtungen kommt. Insbesondere können die Steckverbindungseinrichtungen durch Ineinanderstecken elektrisch und vorzugsweise auch mechanisch miteinander verbunden werden oder sein. In einem Zustand, in welchem die Steckverbindungseinrichtungen ineinander gesteckt und dadurch zerstörungsfrei lösbar, insbesondere elektrisch und vorzugsweise auch mechanisch, miteinander verbunden sind, sind ein von der elektronischen Recheneinrichtung bereitgestelltes oder bereitstellbares, elektrisches Ansteuersignal zum Ansteuern des Elektromotors und die in dem elektrischen Energiespeicher gespeicherte elektrische Energie über die zweite Steckverbindungseinrichtung auf die erste Steckverbindungseinrichtung und von der ersten Steckverbindungseinrichtung an den Elektromotor übertragbar. Durch Ansteuern des Elektromotors kann der Elektromotor betrieben werden, wodurch der Elektromotor, insbesondere wie zuvor beschrieben, das Fahrzeugrad antreibt oder antreiben kann. Dadurch, dass der Elektromotor Bestandteil des ersten Moduls ist, dadurch, dass die elektronische Recheneinrichtung und der elektrische Energiespeicher Bestandteile des zweiten Moduls sind, und dadurch, dass die Module, insbesondere vollständig, außerhalb des Aufbaus und, insbesondere vollständig, außerhalb voneinander angeordnet sind, ist eine besonders vorteilhafte Modulhaftigkeit geschaffen, wodurch der Anhänger besonders einfach und somit zeit- und kostengünstig sowie auf besonders bedarfsgerechte Weise mit dem Hilfsantrieb ausgestattet werden kann. Das jeweilige Modul ist eine jeweilige Baueinheit, die unabhängig von dem übrigen Anhänger und unabhängig von dem jeweiliges anderen Modul hergestellt und somit zusammengebaut ist und in seinem zusammengebauten Zustand an das Fahrgestell außerhalb des Aufbaus montiert werden kann. Insbesondere ist das jeweilige Modul eine jeweilige Box oder das jeweilige Modul wird als jeweilige Box bezeichnet. Die Erfindung ermöglicht es, dass das jeweilige Modul nicht mehr aufwendig innerhalb des Aufbaus verbaut werden muss. Würde beispielsweise der elektrische Energiespeicher innerhalb des Aufbaus angeordnet werden, so müsste der Aufbau beispielsweise durchbohrt werden, um Kabel durch den Aufbau hindurchzuverlegen und dabei von dem elektrischen Energiespeicher innerhalb des Aufbaus an dem außerhalb des Aufbaus angeordneten Elektromotor zu verlegen, um hierdurch den Elektromotor mit der elektrischen Energie versorgen zu können. Dies kann nun vermieden werden. Außerdem können die Module besonders einfach, insbesondere elektrisch, miteinander verbunden werden, indem die Steckverbindungseinrichtungen ineinander gesteckt und dadurch zerstörungsfrei lösbar sowie insbesondere elektrisch miteinander verbunden werden. Außerdem ist es möglich, die Steckverbindungseinrichtung und somit die Module besonders einfach und ohne dass es zu Zerstörungen oder Beschädigungen der Module kommt, voneinander zu trennen, und das jeweilige Modul kann besonders einfach von dem Fahrgestell entfernt werden.

Um die Steckverbindungseinrichtungen und somit die Module besonders einfach und somit zeit- und kostengünstig zumindest elektrisch miteinander verbinden und somit das Fahrgestell bedarfsgerecht mit den Modulen ausstatten zu können, ist es bei einer Ausführungsform der Erfindung vorgesehen, dass die erste Steckverbindungseinrichtung genau einen dem zweiten Modul zugeordneten, ersten Stecker und die zweite Steckverbindungseinrichtung genau einen dem ersten Modul zugeordneten, zweiten Stecker aufweist, wobei der erste Stecker und der zweite Stecker ineinandersteckbar oder ineinander gesteckt sind, wodurch die Steckverbindungseinrichtungen zerstörungsfrei lösbar miteinander verbindbar oder verbunden sind.

Eine weitere Ausführungsform zeichnet sich dadurch aus, dass der Hilfsantrieb einen zweiten Elektromotor aufweist, mittels welchem das andere Fahrzeugrad der Fahrzeugachse antreibbar ist. Das andere Fahrzeugrad wird auch als zweites Fahrzeugrad bezeichnet. Die vorigen und folgenden Ausführungen zum ersten Elektromotor können ohne Weiteres auch auf den zweiten Elektromotor übertragen werden und umgekehrt, und die vorigen und folgenden Ausführungen zum ersten Fahrzeugrad können ohne Weiteres auf das zweite, andere Fahrzeugrad übertragen werden und umgekehrt. Der zweite Elektromotor ist Bestandteil eines dritten Moduls, welches ein drittes Gehäuse aufweist, in welchem der zweite Elektromotor angeordnet ist. Das dritte Modul ist, insbesondere vollständig, außerhalb des Aufbaus, insbesondere vollständig, außerhalb des ersten Moduls und, insbesondere vollständig, außerhalb des zweiten Moduls angeordnet, wobei das dritte Modul, insbesondere direkt, an dem Fahrgestell gehalten ist. Das dritte Modul ist separat von dem ersten Modul und separat von dem zweiten Modul ausgebildet. Das erste Modul und das zweite Modul sind jeweils, insbesondere vollständig, außerhalb des dritten Moduls angeordnet. Das dritte Modul weist eine dritte Steckverbindungseinrichtung auf, wobei die zweite Steckverbindungseinrichtung und die dritte Steckverbindungseinrichtung ineinandersteckbar oder gesteckt und dadurch zerstörungsfrei lösbar miteinander verbindbar oder verbunden sind. In einem Zustand, in welchem die zweite Steckverbindungseinrichtung und die dritte Steckverbindungseinrichtung ineinander gesteckt und dadurch zerstörungsfrei lösbar und vorzugsweise zumindest elektrisch und ganz vorzugsweise elektrisch und mechanisch miteinander verbunden sind, sind ein von der elektronischen Recheneinrichtung bereitgestelltes, elektrisches Ansteuersignal zum Ansteuern des zweiten Elektromotors und die in dem elektrischen Energiespeicher gespeicherte elektrische Energie über die zweite Steckverbindungseinrichtung auf die dritte Steckverbindungseinrichtung und von der dritten Steckverbindungseinrichtung an den zweiten Elektromotor übertragbar. Dadurch kann auch der zweite Elektromotor betrieben werden, sodass das zweite, andere Fahrzeugrad mittels des zweiten Elektromotors angetrieben werden kann. Durch Verwendung der drei Module ist eine besonders vorteilhafte Modulhaftigkeit geschaffen, wodurch das Fahrgestell besonders einfach und bedarfsgerecht mit dem Hilfsantrieb ausgestattet werden kann.

Dabei hat es sich als besonders vorteilhaft gezeigt, wenn die zweite Steckverbindungseinrichtung genau einen dem dritten Modul zugeordneten, dritten Stecker und die dritte Steckverbindungseinrichtung genau einen dem zweiten Modul zugeordneten, vierten Stecker aufweist, wobei der dritte Stecker und der vierte Stecker ineinandersteckbar sind, wodurch die zweite Steckverbindungseinrichtung und die dritte Steckverbindungseinrichtung zerstörungsfrei lösbar miteinander verbindbar sind. Somit können das dritte Modul und das zweite Modul besonders einfach zumindest elektrisch und vorzugsweise auch mechanisch miteinander verbunden werden.

Um das Fahrgestell besonders flexibel und somit bedarfsgerecht mit den Modulen ausstatten zu können, ist es in weiterer Ausgestaltung der Erfindung vorgesehen, dass der erste Stecker, der zweite Stecker, der dritte Stecker und der vierte Stecker paarweise separat voneinander ausgebildet sind.

Eine weitere Ausführungsform zeichnet sich dadurch aus, dass der zweite Stecker und der dritte Stecker zu einem Gesamtstecker zusammengefasst sind, wobei der erste Stecker und der vierte Stecker separat voneinander und separat von dem Gesamtstecker ausgebildet sind. Der erste Stecker und der Gesamtstecker sind ineinandersteckbar, wodurch die erste Steckverbindungseinrichtung und die zweite Steckverbindungseinrichtung zerstörungsfrei lösbar miteinander verbindbar sind. Außerdem sind der vierte Stecker und der Gesamtstecker ineinandersteckbar, wodurch die dritte Steckverbindungseinrichtung und die zweite Steckverbindungseinrichtung zerstörungsfrei lösbar miteinander verbindbar sind. Hierdurch können das erste Modul und das dritte Modul besonders einfach und somit zeit- und kostengünstig mit dem zweiten Modul zumindest elektrisch verbunden werden, wodurch das Fahrgestell besonders einfach und bedarfsgerecht mit dem Hilfsantrieb ausgestattet werden kann.

Schließlich hat es sich als besonders vorteilhaft gezeigt, wenn der zweite Stecker und der dritte Stecker zu einem ersten Gleichstromstecker zusammengefasst sind, wobei der erste Stecker und der vierte Stecker zu einem separat von dem ersten Gesamtstecker ausgebildeten, zweiten Gesamtstecker zusammengefasst sind. Dabei sind der erste Gesamtstecker und der zweite Gesamtstecker ineinandersteckbar, wodurch die erste Steckverbindungseinrichtung mit der zweiten Steckverbindungseinrichtung und die dritte Steckverbindungseinrichtung mit der zweiten Steckverbindungseinrichtung jeweils zerstörungsfrei lösbar verbindbar ist. Dadurch können das dritte Modul und das erste Modul besonders einfach mit dem zweiten Modul, insbesondere zumindest elektrisch, verbunden werden, wodurch das Fahrgestell besonders einfach mit dem Hilfsantrieb ausgestattet werden kann.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Draufsicht eines als Wohnwagen ausgebildeten Anhängera;
- Fig. 2: eine schematische Seitenansicht des Wohnwagens;
- Fig. 3: eine schematische Darstellung einer ersten Ausführungsform von Steckverbindungseinrichtungen; und
- Fig. 4: eine schematische Darstellung einer zweiten Ausführungsform der Steckverbindungseinrichtungen.

In den Figuren sind gleiche oder funktionsgleiche Elemente mit gleichen Bezugszeichen versehen.

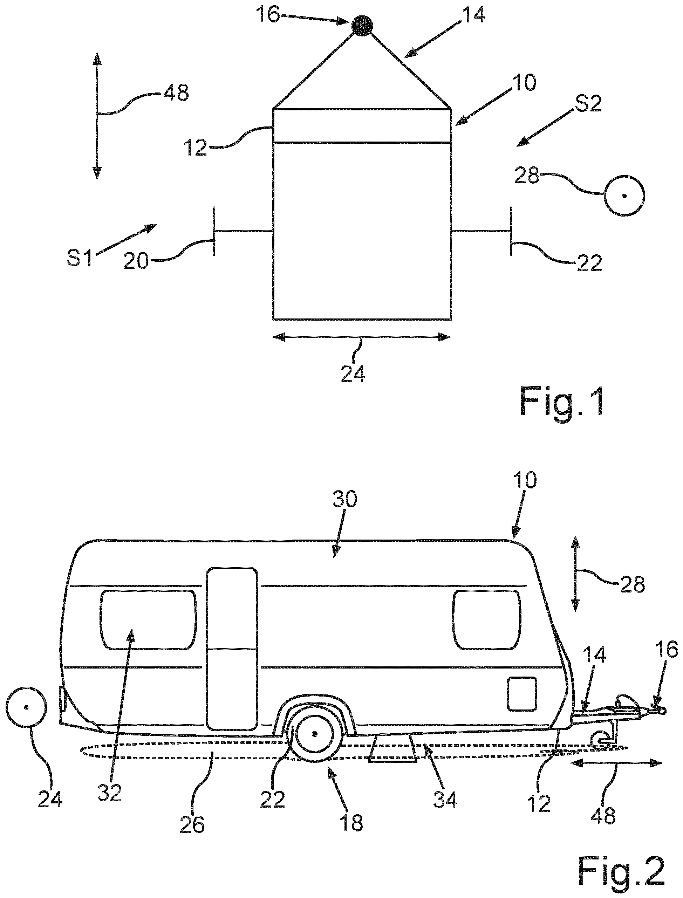

Fig. 1 zeigt in einer schematischen Draufsicht einen als Wohnwagen 10 ausgebildeten Anhänger, welcher als ein Langfahrzeug ausgebildet ist. Der Wohnwagen 10 wird auch als Campingwagen oder Caravan bezeichnet und weist ein Fahrgestell 12 auf, an welchem eine Deichsel 14 vorgesehen ist. An der Deichsel 14 ist eine erste Koppeleinrichtung 16 angeordnet, welche beispielsweise als eine auch als Kugelkupplung bezeichnete Kugelkopfkupplung ausgebildet ist. Mittels der ersten Koppeleinrichtung 16 ist der Wohnwagen 10 gelenkig und zerstörungsfrei lösbar mit einem in den Figuren nicht dargestellten, als Kraftfahrzeug ausgebildeten Zugfahrzeug koppelbar, insbesondere derart, dass das Zugfahrzeug eine beispielsweise als Kugelkopf ausgebildete und auch als Anhängerkupplung bezeichnete, zweite Koppeleinrichtung aufweist, mittels welcher die erste Koppeleinrichtung 16 gelenkig und zerstörungsfrei lösbar koppelbar ist. In Zusammenschau mit Fig. 2 ist erkennbar, dass der Wohnwagen 10, vorliegend genau, eine einfach auch als Achse bezeichnete Fahrzeugachse 18 aufweist, welche, vorliegend genau, zwei Fahrzeugräder aufweist, nämlich ein erstes Fahrzeugrad 20 und ein zweites Fahrzeugrad 22. Die Fahrzeugachse 18 ist an dem Fahrgestell 12 gehalten. Insbesondere derart, dass das derartige Fahrzeugrad 20, 22 um eine jeweilige Raddrehachse relativ zu dem Fahrgestell 12 drehbar ist. Die Fahrzeugräder 20 und 22 sind auf in Fahrzeugquerrichtung des Wohnwagens 10 einander gegenüberliegenden Seiten S1 und S2 des Wohnwagens 10 angeordnet, wobei die Fahrzeugquerrichtung des Wohnwagens 10 durch einen Doppelpfeil 24 veranschaulicht ist. Die einfach auch als Räder bezeichneten Fahrzeugräder 20 und 22 sind Bodenkontaktelemente, über welche der Wohnwagen 10 in Fahrzeughochrichtung des Wohnwagens 10 nach unten hin an einem Boden 26 abstützbar oder abgestützt ist. Die Fahrzeughochrichtung ist durch einen Doppelpfeil 28 veranschaulicht.

Der Wohnwagen 10 weist außerdem einen separat von dem Fahrgestell 12 ausgebildeten und an dem Fahrgestell 12 gehaltenen Aufbau 30 auf, durch welchen ein Innenraum 32 für Personen gebildet ist. Aus einer Zusammenschau von Fig. 2 bis 4 ist erkennbar, dass der Wohnwagen 10 außerdem einen Hilfsantrieb 34 aufweist, mittels welchem die Fahrzeugräder 20 und 22 und dadurch der Wohnwagen 10 antreibbar sind, wodurch der Wohnwagen 10 beispielsweise entlang des Bodens 26 gefahren und dadurch rangiert werden kann. Insbesondere kann hierdurch der Wohnwagen 10 entlang des Bodens 26 gefahren werden, während der Wohnwagen 10 mit keinem Zugfahrzeug gelenkig gekoppelt ist. Somit können beispielsweise Parkvorgänge des Wohnwagens 10 durchgeführt werden, ohne dass der Wohnwagen 10 mit einem Zugfahrzeug gekoppelt ist.

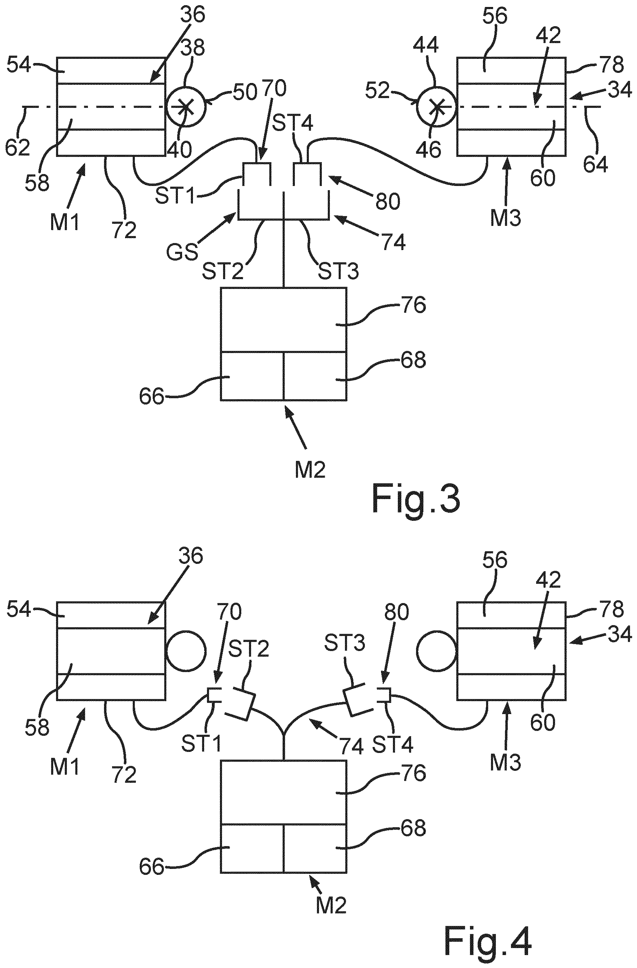

Der Hilfsantrieb 34 weist einen dem ersten Fahrzeugrad 20 zugeordneten, ersten Elektromotor 36 und eine dem ersten Fahrzeugrad 20 zugeordnete, erste Antriebsrolle 38 auf, welche mittels des der Antriebsrolle 38 zugeordneten Elektromotors 36 antreibbar und dadurch um eine erste Rollendrehachse 40 relativ zu dem Fahrgestell 12 drehbar ist. Mittels des ersten Elektromotors 36 ist unter Vermittlung der ersten Antriebsrolle 38 das erste Fahrzeugrad 20 antreibbar und dadurch um die Rollendrehachse des ersten Fahrzeugrads 20 relativ zum Fahrgestell 12 drehbar. Der Hilfsantrieb 34 weist außerdem einen dem zweiten Fahrzeugrad 22 zugeordneten, zweiten Elektromotor 42 und eine dem zweiten Fahrzeugrad 22 zugeordnete, zweite Antriebsrolle 44 auf, welche mittels des zweiten Elektromotors 42 antreibbar und dadurch um eine zweite Rollendrehachse 46 relativ zu dem Fahrgestell 12 drehbar ist. Mittels des Elektromotors 42 ist unter Verwendung der Antriebsrolle 44 das Fahrzeugrad 22 antreibbar und dadurch um die Raddrehachse des zweiten Fahrzeugrads 22 relativ zu dem Fahrgestell 12 drehbar. Das Fahrzeugrad 20 ist der Antriebsrolle 38 zugeordnet und umgekehrt, und das Fahrzeugrad 22 ist der Antriebsrolle 44 zugeordnet und umgekehrt. Die jeweilige Rollendrehachse 40, 46 verläuft in Fahrzeugquerrichtung des Wohnwagens 10. Die jeweilige Antriebsrolle 38, 44 ist, vorliegend in Fahrzeuglängsrichtung des Wohnwagens 10, relativ zu dem Fahrgestell 12 und relativ zu dem jeweiligen, der jeweiligen Antriebsrolle 38, 44 zugeordneten Fahrzeugrad 20, 22 translatorisch zwischen einer jeweiligen, in Fig. 2 und 3 gezeigten, Ausgangsstellung und wenigstens einer jeweiligen Antriebsstellung bewegbar. Die jeweilige Ausgangsstellung wird auch als jeweilige Ruhestellung bezeichnet. Die Fahrzeuglängsrichtung des Wohnwagens 10 ist durch einen Doppelpfeil 48 veranschaulicht.

In der jeweiligen Ruhestellung ist die jeweilige Antriebsrolle 38, 44 vollständig von dem jeweils zugeordneten Fahrzeugrad 20, 22 beabstandet. In der jeweiligen Antriebsstellung liegt die jeweilige Antriebsrolle 38, 44, insbesondere eine jeweilige, außenumfangsseitige Mantelfläche 50, 52 der jeweiligen Antriebsrolle 38, 44 an dem jeweiligen, der jeweiligen Antriebsrolle 38, 44 zugeordneten Fahrzeugrad 20, 22, insbesondere direkt, an. Wird mittels des jeweiligen, zugeordneten Elektromotors 36, 42 die jeweilige, zugeordnete Antriebsrolle 38, 44 angetrieben, während sich die jeweilige Antriebsrolle 38, 44 in der jeweiligen Antriebsstellung befindet, so treibt hierdurch die jeweilige Antriebsrolle 38, 44 das jeweilige, zugeordnete Fahrzeugrad 20, 22 an, wodurch das jeweilige Fahrzeugrad 20, 22 um seine jeweilige Raddrehachse relativ zu dem Fahrgestell 12 gedreht wird. Hierdurch kann der Anhänger (Wohnwagen 10) entlang des Bodens 26 gefahren werden, und zwar ohne dass ein Zugfahrzeug mit dem Anhänger (Wohnwagen 10) gekoppelt ist.

Aus Fig. 3 und 4 ist erkennbar, dass der jeweilige Elektromotor 36, 42 einen jeweiligen Stator 54, 56 und einen jeweiligen Rotor 58, 60 aufweist, welcher mittels des jeweiligen Stators 54, 56 antreibbar und dadurch um eine jeweilige Motordrehachse 62, 64 relativ zu dem jeweiligen Stator 54, 56 drehbar ist. Über seinen jeweiligen Rotor 58, 60 kann der jeweilige Elektromotor 36, 42 wenigstens ein jeweiliges Antriebsdrehmoment bereitstellen, mittels welchem die jeweilige, zugeordnete Antriebsrolle 38, 44 antreibbar und dadurch um die jeweilige Rollendrehachse 40, 46 relativ zu dem Fahrgestell 12 drehbar ist. Somit kann das jeweilige Antriebsdrehmoment unter Vermittlung der jeweiligen Antriebsrolle 38, 44 das jeweilige, der jeweiligen Antriebsrolle 38, 44 zugeordnete Fahrzeugrad 20, 22 antreiben.

Der Hilfsantrieb 34 weist auch eine elektronische Recheneinrichtung 66 auf, welche auch als Steuergerät oder Recheneinheit bezeichnet wird. Die elektronische Recheneinrichtung 66 ist oder bildet beispielsweise einen Computer. Beispielsweise kann die elektronische Recheneinrichtung 66 ein Computerprogramm ausführen, das Befehle umfasst, die dann, wenn das Computerprogramm durch die elektronische Recheneinrichtung 66 ausgeführt wird, die elektronische Recheneinrichtung 66 veranlassen, die Elektromotoren 36 und 42 anzusteuern und dadurch zu steuern oder zu regeln. Des Weiteren umfasst der Hilfsantrieb 34 einen elektrischen Energiespeicher 68, in oder mittels welchem elektrische Energie, insbesondere elektrochemisch, gespeichert oder zu speichern ist, wobei der jeweilige Elektromotor 36, 42 mit der in dem elektrischen Energiespeicher 68 gespeicherten elektrischen Energie versorgbar ist. Durch Versorgen des jeweiligen Elektromotors 36, 42 mit der in dem elektrischen Energiespeicher 68 gespeicherten elektrischen Energie kann der jeweiligen Elektromotor 36, 42 betrieben werden und somit das jeweilige, zugeordnete Fahrzeugrad 20, 22 antreiben.

Um nun das Fahrgestell 12 und somit den Wohnwagen 10 insgesamt besonders einfach und bedarfsgerecht mit dem Hilfsantrieb 34 ausstatten zu können, ist der Elektromotor 36 ein Bestandteil eines, insbesondere vollständig, außerhalb des Aufbaus 30, und somit, insbesondere vollständig, außerhalb des Innenraums 32 angeordneten und zumindest mittelbar, insbesondere direkt, an dem Fahrgestell 12 gehaltenen, ersten Moduls M1, welches eine erste Steckverbindungseinrichtung 70 und ein erstes Gehäuse 72 aufweist, in welchem der erste Elektromotor 36 und somit der Stator 54 und der Rotor 58 angeordnet sind. Die elektronische Recheneinrichtung 66 und der elektrische Energiespeicher 68 sind Bestandteile eines, insbesondere vollständig, außerhalb des Aufbaus 30 angeordneten und zumindest mittelbar, insbesondere direkt, an dem Fahrgestell 12 gehaltenen und, insbesondere vollständig, außerhalb des ersten Moduls M1 angeordneten und separat von dem ersten Modul M1 ausgebildeten, zweiten Moduls M2, welches eine zweite Steckverbindungseinrichtung 74 und ein zweites Gehäuse 76 aufweist, in welchem die elektronische Recheneinrichtung 66 und der elektrische Energiespeicher 68 angeordnet sind. Das erste Modul M1 ist, insbesondere vollständig, außerhalb des zweiten Moduls M2 angeordnet und separat von dem zweiten Modul M2 ausgebildet. Der zweite Elektromotor 42 ist Bestandteil eines dritten Moduls M3, welches ein drittes Gehäuse 78 aufweist. Der zweite Elektromotor 42 und somit der Stator 56 und der Rotor 60 sind in dem dritten Gehäuse 78 angeordnet. Das dritte Modul ist, insbesondere vollständig, außerhalb des Aufbaus 30 angeordnet, wobei das dritte Modul M3, insbesondere vollständig, außerhalb des ersten Moduls M1 und, insbesondere vollständig, außerhalb des zweiten Moduls M2 angeordnet ist. Außerdem ist das dritte Modul M3 zumindest mittelbar, insbesondere direkt, an dem Fahrgestell 12 gehalten. Das dritte Modul M3 ist separat von dem ersten Modul und separat von dem zweiten Modul ausgebildet, sodass die Module M1, M2 und M3 paarweise betrachtet separat voneinander ausgebildet sind. Des Weiteren ist es vorgesehen, dass das erste Modul M1 und das zweite Modul M2, insbesondere jeweils vollständig, außerhalb des dritten Moduls M3 angeordnet sind. Das dritte Modul M3 weist eine dritte Steckverbindungseinrichtung 80 auf. Bei dem in den Figuren gezeigten Ausführungsbeispiel ist es vorgesehen, dass die Module M1, M2 und M3 paarweise betrachtet vollständig voneinander beabstandet sind. Ferner ist es vorzugsweise vorgesehen, dass das erste Modul M1 unter Umgehung des Moduls M2 und unter Umgehung des Moduls M3, das heißt weder unter Vermittlung des Moduls M2 noch unter Vermittlung des Moduls M3 an dem Fahrgestell 12 gehalten ist. Dementsprechend ist es vorzugsweise vorgesehen, dass das Modul M2 unter Umgehung des Moduls M1 und unter Umgehung des Moduls M3, das heißt nicht unter Vermittlung des Moduls M1 und nicht unter Vermittlung des Moduls M3 an dem Fahrgestell 12 gehalten ist. Ferner ist es vorliegend vorzugsweise vorgesehen, dass das Modul M3 unter Umgehung des Moduls M1 und unter Umgehung des Moduls M2, das heißt nicht über das Modul M1 und auch nicht über das Modul M2 an dem Fahrgestell 12 gehalten ist.

Die erste Steckverbindungseinrichtung 70 und die zweite Steckverbindungseinrichtung 74 sind ineinandersteckbar und dadurch zerstörungsfrei lösbar miteinander verbindbar, derart, dass die Steckverbindungseinrichtungen 70 und 74 zumindest elektrisch und vorzugsweise auch mechanisch miteinander verbindbar sind. Die zweite Steckverbindungseinrichtung 74 und die dritte Steckverbindungseinrichtung 80 sind ineinandersteckbar und dadurch zerstörungsfrei lösbar miteinander verbindbar, insbesondere derart, dass die Steckverbindungseinrichtungen 74 und 80 zumindest elektrisch und vorzugsweise auch mechanisch miteinander verbindbar sind. In einem Zustand, in welchem die erste Steckverbindungseinrichtung 70 und die zweite Steckverbindungseinrichtung 74 ineinander gesteckt und dadurch zerstörungsfrei lösbar miteinander verbunden sind, sind ein von der elektronischen Recheneinrichtung 66 bereitgestelltes, erstes elektrisches Ansteuersignal zum Ansteuern des ersten Elektromotors 36 und die in dem elektrischen Energiespeicher 68 gespeicherte elektrische Energie über die zweite Steckverbindungseinrichtung 74 auf die erste Steckverbindungseinrichtung 70 und von der ersten Steckverbindungseinrichtung 70 an den Elektromotor 36 übertragbar, wodurch der Elektromotor 36 betrieben werden und in der Folge das zugeordnete, erste Fahrzeugrad 20 antreiben kann. Dementsprechend sind in einem Zustand, in welchem die zweite Steckverbindungseinrichtung 74 und die dritte Steckverbindungseinrichtung 80 ineinander gesteckt und dadurch zerstörungsfrei lösbar miteinander verbunden sind, ein von der elektronischen Recheneinrichtung 66 bereitgestelltes, zweites elektrisches Ansteuersignal zum Ansteuern des zweiten Elektromotors 42 und die in dem elektrischen Energiespeicher 68 gespeicherte elektrische Energie über die zweite Steckverbindungseinrichtung 74 auf die dritte Steckverbindungseinrichtung 80 und von der dritten Steckverbindungseinrichtung 80 an den zweiten Elektromotor 42 übertragbar, wodurch der zweite Elektromotor 42 betrieben werden und in der Folge das ihm zugeordnete, zweite Fahrzeugrad 22 antreiben kann.

Aus Fig. 2 bis 4 ist erkennbar, dass die erste Steckverbindungseinrichtung 70 genau einen dem zweiten Modul M2 zugeordneten, ersten Stecker ST1 aufweist, wobei die zweite Steckverbindungseinrichtung 74 genau einen dem ersten Modul M1 zugeordneten, zweiten Stecker ST2 aufweist. Der erste Stecker ST1 und der zweite Stecker ST2 sind ineinandersteckbar, wodurch die erste Steckverbindungseinrichtung 70 und die zweite Steckverbindungseinrichtung 74 zerstörungsfrei lösbar miteinander verbindbar sind. Erkennbar ist auch, dass die zweite Steckverbindungseinrichtung 74 genau einen dem dritten Modul M3 zugeordneten, dritten Stecker ST3 aufweist, wobei die dritte Steckverbindungseinrichtung 80 genau einen dem zweiten Modul M2 zugeordneten, vierten Stecker ST4 aufweist, wobei der dritte Stecker ST3 und der vierte Stecker ST4 ineinandersteckbar sind, wodurch die zweite Steckverbindungseinrichtung 74 und die dritte Steckverbindungseinrichtung 80 zerstörungsfrei lösbar miteinander verbindbar sind.

Fig. 3 zeigt eine erste Ausführungsform der Steckverbindungseinrichtungen 70, 74 und 80. Fig. 4 zeigt eine zweite Ausführungsform der Steckverbindungseinrichtungen 70, 74 und 80. Bei der zweiten Ausführungsform sind die Stecker ST1, ST2, ST3 und ST4 paarweise separat voneinander ausgebildet.

Bei der in Fig. 3 gezeigten, ersten Ausführungsform sind der zweite Stecker ST2 und der dritte Stecker ST3 zu einem Gesamtstecker GS zusammengefasst, welcher als eine einzige Baueinheit handhabbar ist. Somit sind Relativbewegungen zwischen den Steckern ST2 und ST3 unterbunden. Der erste Stecker ST1 und der vierte Stecker ST4 sind separat voneinander und jeweils separat von dem Gesamtstecker GS ausgebildet, sodass die Stecker ST1 und ST4 relativ zueinander und jeweils einzeln relativ zu dem Gesamtstecker GS bewegt werden können. Dabei sind der erste Stecker ST1 und der Gesamtstecker GS ineinandersteckbar, wodurch die zweite Steckverbindungseinrichtung 74 und die erste Steckverbindungseinrichtung 70 zerstörungsfrei lösbar miteinander verbindbar sind. Außerdem sind der vierte Stecker ST4 und der Gesamtstecker GS ineinandersteckbar, wodurch die dritte Steckverbindungseinrichtung 80 und die zweite Steckverbindungseinrichtung 74 zerstörungsfrei lösbar miteinander verbindbar sind.

Bei einer weiteren, in den Figuren nicht gezeigten, dritten Ausführungsform ist es denkbar, dass der zweite Stecker ST2 und der dritte Stecker ST3 zu einem ersten Gesamtstecker vorliegend in Form des Gesamtsteckers GS zusammengefasst sind, wobei beispielsweise der erste Stecker ST1 und der vierte Stecker ST4 zu einem separat von dem ersten Gesamtstecker ausgebildeten, zweiten Gesamtstecker zusammengefasst sind. Somit ist der zweite Gesamtstecker als zusammengebaute Baueinheit handhabbar, sodass Relativbewegungen zwischen dem ersten Stecker ST1 und dem vierten Stecker ST4 unterbunden sind. Dabei sind beispielsweise der erste Gesamtstecker und der zweite Gesamtstecker ineinandersteckbar, wodurch die zweite Steckverbindungseinrichtung 74 mit der ersten Steckverbindungseinrichtung 70 und die dritte Steckverbindungseinrichtung 80 mit der zweiten, nicht dritten (!) Steckverbindungseinrichtung 74 jeweils zerstörungsfrei lösbar verbindbar ist. Somit kann das Fahrgestell 12 zeit- und kostengünstig sowie bedarfsgerecht mit dem Hilfsantrieb 34 ausgestattet werden.

## Patentansprüche

1. Anhänger (10), mit einem Fahrgestell (12), an welchem wenigstens eine Fahrzeugachse (18) mit zwei Fahrzeugrädern (20, 22) gehalten ist, mit einem separat von dem Fahrgestell (12) ausgebildeten und an dem Fahrgestell (12) gehaltenen Aufbau (30), durch welchen ein Innenraum (32) gebildet ist, und mit einem Hilfsantrieb (34), welcher aufweist:
- wenigstens einen Elektromotor (36), mittels welchem eines der Fahrzeugräder (20, 22) der Fahrzeugachse (18) antreibbar ist;
- eine elektronische Recheneinrichtung (66), mittels welcher der Elektromotor (36) ansteuerbar und dadurch betreibbar ist; und
- wenigstens einen elektrischen Energiespeicher (68) zum Speichern von elektrischer Energie, mit welcher der Elektromotor (36) versorgbar ist;
**dadurch gekennzeichnet, dass**:
- der Elektromotor (36) Bestandteil eines außerhalb des Aufbaus (30) angeordneten und an dem Fahrgestell (12) gehaltenen, ersten Moduls (M1) mit einer ersten Steckverbindungseinrichtung (70) und einem ersten Gehäuse (72) ist, in welchem der Elektromotor (36) angeordnet ist;
- die elektronische Recheneinrichtung (66) und der elektrische Energiespeicher (68) Bestandteile eines außerhalb des Aufbaus (30) angeordneten und an dem Fahrgestell (12) gehaltenen und außerhalb des ersten Moduls (M1) angeordneten und separat von dem ersten Modul (M1) ausgebildeten, zweiten Moduls (M2) mit einer zweiten Steckverbindungseinrichtung (74) und einem zweiten Gehäuse (76) sind, in welchem die elektronische Recheneinrichtung (66) und der elektrische Energiespeicher (68) angeordnet sind;
- das erste Modul (M1) außerhalb des zweiten Moduls (M2) angeordnet und separat von dem zweiten Modul (M2) ausgebildet ist;
- die Steckverbindungseinrichtungen (70, 74) ineinandersteckbar und dadurch zerstörungsfrei lösbar miteinander verbindbar sind; und
- in einem Zustand, in welchem die Steckverbindungseinrichtungen (70, 74) ineinander gesteckt und dadurch zerstörungsfrei lösbar miteinander verbunden sind, ein von der elektronischen Recheneinrichtung (66) bereitgestelltes, elektrisches Ansteuersignal zum Ansteuern des Elektromotors (36) und die in dem elektrischen Energiespeicher (68) gespeicherte elektrische Energie über die zweite Steckverbindungseinrichtung (74) auf die erste Steckverbindungseinrichtung (70) und von der ersten Steckverbindungseinrichtung (70) an den Elektromotor (36) übertragbar sind.

2. Anhänger (10) nach Anspruch 1,
**dadurch gekennzeichnet, dass**
die erste Steckverbindungseinrichtung (70) genau einen dem zweiten Modul (M2) zugeordneten, ersten Stecker (ST1) und die zweite Steckverbindungseinrichtung (74) genau einen dem ersten Modul (M1) zugeordneten, zweiten Stecker (ST2) aufweist, wobei der erste Stecker (St1) und der zweiten Stecker (ST2) ineinandersteckbar sind, wodurch die Steckverbindungseinrichtungen (70, 74) zerstörungsfrei lösbar miteinander verbindbar sind.

3. Anhänger (10) nach Anspruch 1 oder 2,
**dadurch gekennzeichnet, dass**:
- der Hilfsantrieb (34) einen zweiten Elektromotor (42), mittels welchem das andere Fahrzeugrad (22) der Fahrzeugachse (18) antreibbar ist;
- der zweite Elektromotor (42) Bestandteil eines dritten Moduls (M3) mit einem dritten Gehäuse (78) ist, in welchem der zweite Elektromotor (42) angeordnet ist;
- das dritte Modul (M3) außerhalb des Aufbaus (30), außerhalb des ersten Moduls (M1) und außerhalb des zweiten Moduls (M2) angeordnet und an dem Fahrgestell (12) gehalten ist;
- das dritte Modul (M3) separat von dem ersten Modul (M1) und separat von dem zweiten Modul (M2) ausgebildet ist;
- das erste Modul (M1) und das zweite Modul (M2) außerhalb des dritten Moduls (M3) angeordnet sind;
- das dritte Modul (M3) eine dritte Steckverbindungseinrichtung (80) aufweist;
- die zweite Steckverbindungseinrichtung (74) und die dritte Steckverbindungseinrichtung (80) ineinandersteckbar und dadurch zerstörungsfrei lösbar miteinander verbindbar sind; und
- in einem Zustand, in welchem die zweite Steckverbindungseinrichtung (74) und die dritte Steckverbindungseinrichtung (80) ineinander gesteckt und dadurch zerstörungsfrei lösbar miteinander verbunden sind, ein von der elektronischen Recheneinrichtung (66) bereitgestelltes, elektrisches Ansteuersignal zum Ansteuern des zweiten Elektromotors (42) und die in dem elektrischen Energiespeicher (68) gespeicherte elektrische Energie über die zweite Steckverbindungseinrichtung (74) auf die dritte Steckverbindungseinrichtung (80) und von der dritten Steckverbindungseinrichtung (80) an den zweiten Elektromotor (42) übertragbar sind.

4. Anhänger (10) nach Anspruch 3, **dadurch gekennzeichnet, dass** die zweite Steckverbindungseinrichtung (74) genau einen dem dritten Modul (M3) zugeordneten, dritten Stecker (ST3) und die dritte Steckverbindungseinrichtung (80) genau einen dem zweiten Modul (M2) zugeordneten, vierten Stecker (ST4) aufweist, wobei der dritte Stecker (ST3) und der vierte Stecker (ST4) ineinandersteckbar sind, wodurch die zweite Steckverbindungseinrichtung (74) und die dritte Steckverbindungseinrichtung (80) zerstörungsfrei lösbar miteinander verbindbar sind.

5. Anhänger (10) nach den Ansprüchen 2 bis 4,
**dadurch gekennzeichnet, dass**
der erste Stecker (ST1), der zweite Stecker (ST2), der dritte Stecker (ST3) und der vierte Stecker (ST4) paarweise separat voneinander ausgebildet sind.

6. Anhänger (10) nach den Ansprüchen 2 bis 4,
**dadurch gekennzeichnet, dass**:
- der zweite Stecker (ST2) und der dritte Stecker (ST3) zu einem Gesamtstecker (GS) zusammengefasst sind;
- der erste Stecker (ST1) und der vierte Stecker (ST4) separat voneinander und separat von dem Gesamtstecker (GS) ausgebildet sind;
- der erste Stecker (ST1) und der Gesamtstecker (GS) ineinandersteckbar sind, wodurch die erste Steckverbindungseinrichtung (70) und die zweite Steckverbindungseinrichtung (74) zerstörungsfrei lösbar miteinander verbindbar sind; und
- der vierte Stecker (ST4) und der Gesamtstecker (GS) ineinandersteckbar sind, wodurch die dritte Steckverbindungseinrichtung (80) und die zweite Steckverbindungseinrichtung (74) zerstörungsfrei lösbar miteinander verbindbar sind.

7. Anhänger (10) nach den Ansprüchen 2 bis 4,
**dadurch gekennzeichnet, dass**:
- der zweite Stecker (ST2) und der dritte Stecker (ST3) zu einem ersten Gesamtstecker (GS) zusammengefasst sind;
- der erste Stecker (ST1) und der vierte Stecker (ST4) zu einem separat von dem ersten Gesamtstecker (GS) ausgebildeten, zweiten Gesamtstecker zusammengefasst sind; und
- der erste Gesamtstecker (GS) und der zweite Gesamtstecker ineinandersteckbar sind, wodurch die erste Steckverbindungseinrichtung (70) mit der zweiten Steckverbindungseinrichtung (74) und die dritte Steckverbindungseinrichtung (80) mit der zweiten Steckverbindungseinrichtung (74) jeweils zerstörungsfrei lösbar verbindbar ist.
